# EUROPÄISCHE PATENTSCHRIFT

(11) **EP 1 503 475 B1**
(45) Veröffentlichungstag und Bekanntmachung des Hinweises auf die Patenterteilung: **28.11.2007**
(21) Anmeldenummer: 03017299.3
(22) Anmeldetag: 30.07.2003
(51) Int. Cl.: H02J 3/18

(54) **Anschaltverfahren für einen Blindleistungskompensator**
Connecting process for a reactive power compensator
Procédé de connexion pour un compensateur de puissance reactive

(43) Veröffentlichungstag der Anmeldung: 02.02.2005
(73) Patentinhaber: SIEMENS AKTIENGESELLSCHAFT, 80333 München (DE)
(72) Erfinder: Hörger, Wolfgang, Dr., 91353 Hausen (DE); Meusel, Wolfgang, 91074 Herzogenaurach (DE)

(56) Entgegenhaltungen:
- EP-A- 0 856 930
- EP-A- 0 911 951
- WO-A-99/63640
- DE-A- 19 939 709
- US-A- 5 963 021

## Beschreibung

Die vorliegende Erfindung betrifft ein Anschaltverfahren für einen Blindleistungskompensator mit mehreren parallel zueinander angeordneten Kompensationskomponenten an eine Betriebsspannung gemäß dem Oberbegriff des Patentanspruchs 1.

Sie betrifft ferner ein auf einem Datenträger gespeichertes Steuerprogramm, eine Steuereinheit für einen Blindleistungskompensator und einen Blindleistungskompensator, die zur Durchführung eines derartigen Anschaltverfahrens ausgebildet sind.

Blindleistungskompensatoren - sogenannte SVC-Anlagen (SVC = static VAR compensator) - bestehen in der Regel aus einem TCR (TCR = thyristor controlled reactance) und mindestens einem Filterkreis. Sie werden bei Großverbrauchern eingesetzt, die aus einem Wechselspannungsnetz mit Wechselstrom gespeist werden, und dienen dazu, Blindleistungskomponenten des Wechselstroms zu kompensieren.

Der Blindleistungskompensator ist in der Regel an das Wechselspannungsnetz (bzw. allgemeiner die Betriebsspannung) anschaltbar und auch wieder von ihm trennbar. Beim Anschalten des Blindleistungskompensators kann es zu transienten Störungen in der Betriebsspannung und/oder in den fließenden Strömen kommen. Im Extremfall kann dies dazu führen, dass eine andere Anlage, die ebenfalls mit der Betriebsspannung gespeist wird, notabgeschaltet wird. Produktionsausfälle oder sonstige Betriebsstörungen sind die Folge.

Zur Vermeidung solcher Betriebsstörungen wird der Blindleistungskompensator im Stand der Technik nur dann an die Betriebsspannung angeschaltet, wenn andere, ebenfalls über die Betriebsspannung versorgte Anlagen oder Anlagenteile, deren störungsfreier Betrieb gewährleistet sein muss, gerade nicht betrieben werden. Dies schränkt aber nicht nur die Flexibilität beim Anschalten des Blindleistungskompensators an die Beriebsspannung ein. Darüber hinaus ist diese Vorgehensweise in der Praxis auch nur mit großem Aufwand sicher zu stellen.

Es ist ferner bekannt, bei mehrphasigen Wechselspannungsnetzen die einzelnen Phasen des Wechselspannungsnetzes mit einem definierten Zeitversatz zum Spannungsnulldurchgang der jeweiligen Phase nacheinander an den Blindleistungskompensator anzuschalten. Dies erfordert aber spezielle, kostenintensive Schalteinrichtungen.

Aus der WO 99/63640 ist eine Anordnung zur Blindstromkompensation bekannt, wobei eine aktive Induktivität und eine passive Kapazität über eine Gleichstromquelle schaltbar miteinander verbunden sind. Die aktive Induktivität und die passive Kapazität sind über einen Widerstand direkt miteinander verbunden, wobei der Widerstandwert derart gewählt ist, dass die passive Kapazität erst dann zugeschaltet wird, wenn die aktive Induktivität bereits mit der Gleichstromquelle verbunden ist.

Die US 5,963,021 beschreibt eine Vorrichtung zur Blindleistungskompensation mit einem Transformator mit einer Primär- und mit einer Sekundärwicklung, wobei der Transformator mit einer Last verbunden ist. Dabei wird mit Hilfe einer Anordnung aus Kapazitäten und/oder Induktivitäten die Phasenverschiebung verändert.

Aus der EP 0 856 930 A2 ist eine elektrische Schaltungsanordnung zur verlustleistungsarmen Beeinflussung von Grundwellen-Blindstrom- und/oder Oberwellenströmen in Drei-Phasen-Wechselstromnetzen mit oder ohne Nullleiter bekannt, wobei eine Induktivität derart angeordnet ist, dass jedes ihrer beiden Enden mit jeder der drei Phasen über jeweils einen ansteuerbaren elektronischen Schalter verbunden ist.

Die Aufgabe der vorliegenden Erfindung besteht darin, ein Anschaltverfahren für einen Blindleistungskompensator zu schaffen, bei dem unzulässig hohe Rückwirkungen auf die Betriebsspannung vermieden werden und das einfacher zu realisieren ist als das obenstehend erwähnte Anschaltverfahren des Standes der Technik.

Die Aufgabe wird für das Anschaltverfahren, wobei die Kompensationskomponenten von einer Steuereinheit zunächst nacheinander über einen Vorwiderstand und sodann vorwiderstandsfrei an die Betriebsspannung angeschaltet werden, dadurch gelöst, dass als zuerst über den Vorwiderstand an die Betriebsspannung angeschaltete Kompensationskomponente eine aktive Komponente mit mindestens einem steuerbaren Blindleistungselement, mit z.B. einem TCR, verwendet wird.

Für das Steuerprogramm, die Steuereinheit und den Blindleistungskompensator wird die Aufgabe dadurch gelöst, dass sie die zur Durchführung des erfindungsgemäßen Anschaltverfahrens ausgebildet sind.

Denn dadurch wird nicht der gesamte Blindleistungskompensator auf einmal an die Betriebsspannung angeschaltet. Vielmehr erfolgt ein zeitlich gestaffeltes und auf Grund des Vorwiderstandes gedämpftes Anschalten der Kompensationskomponenten an die Betriebsspannung. Erst wenn dieses Anschalten abgeschlossen ist, erfolgt ein vorwiderstandsfreies Anschalten des Blindleistungskompensators an die Betriebsspannung.

Indem erfindungsgemäß die zuerst über den Vorwiderstand an die Betriebsspannung angeschaltete Kompensationskomponente eine aktive Komponente mit mindestens einem steuerbaren Blindleistungselement ist, z. B. einen TCR aufweist, ist von Anfang an eine aktive Steuerung des über den Vorwiderstand fließenden Stromes möglich. Dies kann insbesondere dazu ausgenutzt werden, dass ein über den Vorwiderstand fließender Strom der Grundfrequenz der Wechselspannung im Wesentlichen kompensiert wird.

Die nach der ersten Kompensationskomponente über den Vorwiderstand an die Betriebsspannung angeschalteten Kompensationskreise sind in der Regel rein passive Filterkreise.

Wenn der Vorwiderstand von der Steuereinheit nach dem vorwiderstandsfreien Anschalten der Kompensationskomponenten an die Betriebsspannung von der Betriebsspannung getrennt wird, ist jeglicher dauerhafte Stromfluss über den Vorwiderstand ausgeschlossen. Dies ist insbesondere deshalb von Vorteil, weil dann bei einem späteren Trennen des Blindleistungskompensators von der Betriebsspannung dieses Trennen ohne Rücksicht auf den Vorwiderstand erfolgen kann.

Wenn das vorwiderstandsfreie Anschalten der Kompensationskomponenten an die Betriebsspannung für alle Kompensationskomponenten gleichzeitig erfolgt, ist das vorwiderstandsfreie Anschalten besonders einfach realisierbar.

Das erfindungsgemäße Anschaltverfahren arbeitet besonders gut, wenn ein zeitlicher Versatz zwischen dem Anschalten von zwei unmittelbar nacheinander über den Vorwiderstand an die Betriebsspannung angeschalteten Kompensationskomponenten zwischen 50 und 300 ms liegt. Denn dann ist ein guter Kompromiss zwischen einem rückwirkungsarmen Anschalten des gesamten Blindleistungskompensators und einer schnellen Reaktionsmöglichkeit auf ein Ereignis, welches ein Anschalten des Blindleistungskompensators erfordert, möglich. Der zeitliche Versatz sollte dabei vorzugsweise zwischen 80 und 200 ms liegen, z. B. bei 100 bis 150 ms.

Zur Realisierung des erfindungsgemäßen Anschaltverfahrens ist es beispielsweise möglich, zum Anschalten der Kompensationskomponenten an die Betriebsspannung eine den Kompensationskomponenten vorgeordnete Verteilerschiene über den Vorwiderstand an die Betriebsspannung anzuschalten und die Kompensationskomponenten an die Verteilerschiene anzuschalten. In diesem Fall ist es insbesondere möglich, zum nachfolgenden vorwiderstandsfreien Anschalten der Kompensationskomponenten an die Betriebsspannung lediglich noch die Verteilerschiene vorwiderstandsfrei an die Betriebsspannung anzuschalten.

Vorzugsweise erfolgt das Anschalten der ersten Kompensationskomponente an die Verteilerschiene erst nach einem Zeitverzug nach dem Anschalten der Verteilerschiene über den Vorwiderstand an die Betriebsspannung.

Der Zeitverzug kann die gleichen Werte aufweisen wie der zeitliche Versatz.

Ein häufiger Anwendungsfall besteht darin, dass die Betriebsspannung eine Hochspannung, insbesondere eine Mittelspannung zwischen 6 und 36 kV, ist.

Wenn die Betriebsspannung mehrere Phasen aufweist und die Phasen von der Steuereinheit gleichzeitig an die Kompensationskomponenten angeschaltet werden, ist das erfindungsgemäße Anschaltverfahren besonders einfach realisierbar.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung
- FIG 1: ein Blockschaltbild eines Blindleistungskompensators,
- FIG 2: ein Zeitdiagramm,
- FIG 3: einen Spannungsverlauf,
- FIG 4: einen Stromverlauf,
- FIG 5: einen Spannungsverlauf und
- FIG 6: einen Stromverlauf.

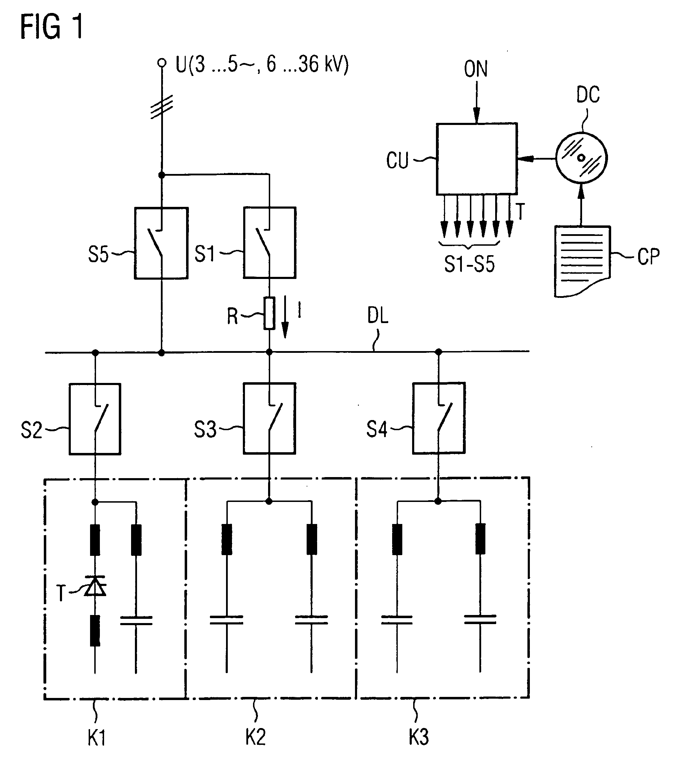

Gemäß FIG 1 weist ein Blindleistungskompensator mehrere Kompensationskomponenten K1 bis K3 auf. Die Kompensationskomponenten K1 bis K3 sind bezüglich einer Verteilerschiene DL parallel zueinander angeordnet. Gemäß FIG 1 sind drei Kompensationskomponenten K1 bis K3 vorhanden. Es könnten aber auch mehr oder weniger Kompensationskomponenten K1 bis K3 vorhanden sein. Eine Anzahl von zwei Kompensationskomponenten K1 bis K3 sollte aber nicht unterschritten werden.

Die Kompensationskomponente K1 ist eine aktive Komponente mit mindestens einem steuerbaren Blindleistungselement. Das steuerbare Blindleistungselement ist dabei gemäß FIG 1 als TCR ausgebildet. Sie weist also eine Thyristoreinheit T auf, mittels derer die Reaktanz der Kompensationskomponente K1 steuerbar ist. Die Kondensationskomponente K1 weist gemäß FIG 1 zusätzlich auch einen rein passiven Filterkreis auf. Dies ist aber nicht zwingend erforderlich. Die anderen Kompensationskomponenten K2 und K3 sind rein passive Filterkreise.

Die Kompensationskomponenten K1 bis K3 sind über Schalter S1 bis S5 und einen Vorwiderstand R an eine Betriebsspannung U anschaltbar. Die Betriebsspannung U ist in der Regel eine Hochspannung, z. B. eine Mittelspannung zwischen 6 und 36 kV. Sie ist üblicherweise ein Drehstromsystem mit drei Phasen. Sie kann im Einzelfall aber auch ein Drehstromsystem mit mehr als drei Phasen sein, z. B. ein Drehstromsystem mit vier oder fünf Phasen. Sie kann aber auch ein einphasiges Spannungssystem sein.

Der Blindleistungskompensator weist ferner eine Steuereinheit CU auf, welche die Schalter S1 bis S5 und die Thyristoreinheit T ansteuert. Die Steuereinheit CU ist dabei eine programmierbare Steuereinheit CU, die ein Steuerprogramm CP ausführt. Das Steuerprogramm CP wird der Steuereinheit CU dabei über einen Datenträger DC zugeführt, auf der das Steuerprogramm CP in (ausschließlich) maschinenlesbarer Form gespeichert ist.

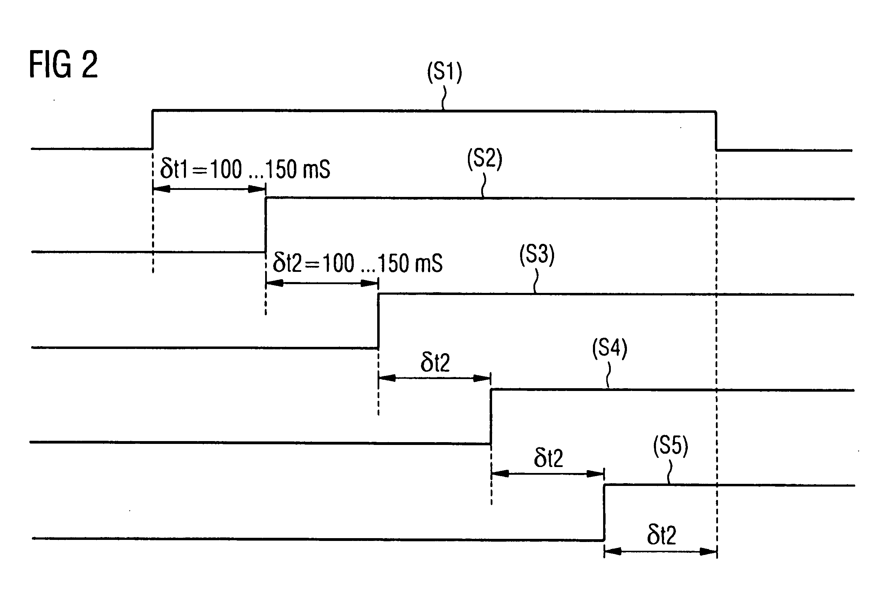

Auf Grund der Programmierung mit dem Steuerprogramm CP schaltet die Steuereinheit CU die Kompensationskomponenten K1 bis K3 des Blindleistungskompensators auf folgende, in Verbindung mit FIG 2 näher erläuterte Weise an die Betriebsspannung U an.

Wenn der Steuereinheit CU ein Anschaltbefehl ON zugeführt wird, schließt die Steuereinheit CU zunächst unverzüglich den Schalter S1. Es wird also zunächst die Verteilerschiene DL an die Betriebsspannung U angeschaltet.

Es ist möglich, gleichzeitig auch den Schalter S2 zu schließen. Gegebenenfalls kann der Schalter S2 sogar entfallen. Gemäß FIG 2 schließt die Steuereinheit CU den Schalter S2 aber erst nach einem Zeitverzug δt1. Nach jeweils dem Ablauf eines zeitlichen Versatzes δt2 schließt die Steuereinheit CU dann die Schalter S3 und S4. Damit sind alle Kompensationskomponenten K1 bis K3 über den Vorwiderstand R an die Betriebsspannung U angeschaltet.

Nach einem erneuten Verstreichen des zeitlichen Versatzes δt2 schließt die Steuereinheit CU den Schalter S5. Nach dem Schließen des Schalters S5 wartet die Steuereinheit CU nochmals den zeitlichen Versatz δt2 ab und öffnet dann den Schalter S1.

Der Zeitverzug δt1 liegt vorzugsweise zwischen 50 und 300 ms, insbesondere zwischen 80 und 200 ms. Gemäß FIG 2 liegt er z. B. bei 100 bis 150 ms. Der zeitliche Versatz δt2 liegt vorzugsweise zwischen 50 und 300 ms, insbesondere zwischen 80 und 200 ms. Gemäß FIG 2 liegt auch er z. B. bei 100 bis 150 ms. Der Zeitverzug δt1 und der zeitliche Versatz δt2 können insbesondere den gleichen Wert aufweisen.

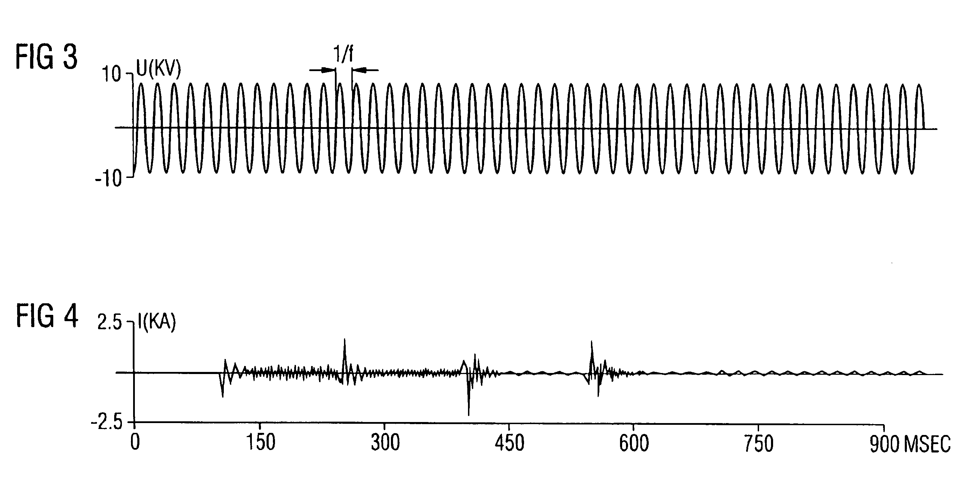

Wie aus FIG 3 für eine der Phasen der Betriebsspannung U ersichtlich ist, weist die Betriebsspannung U eine Grundfrequenz f auf. Die Steuereinheit CU steuert gemäß FIG 1 nicht nur die Schalter S1 bis S5, sondern auch die Thyristoreinheit T an. Die Thyristoreinheit T und damit die aktive Komponente K1 wird von der Steuereinheit CU dabei derart angesteuert, dass ein über den Vorwiderstand R fließender Strom I im Wesentlichen kompensiert wird, soweit er die Grundfrequenz f aufweist. Die Ansteuerung der Thyristoreinheit T erfolgt also in Abhängigkeit von den an die Schalter S1 bis S5 ausgegebenen Steuerbefehlen. Dies ist deutlich aus FIG 4 ersichtlich.

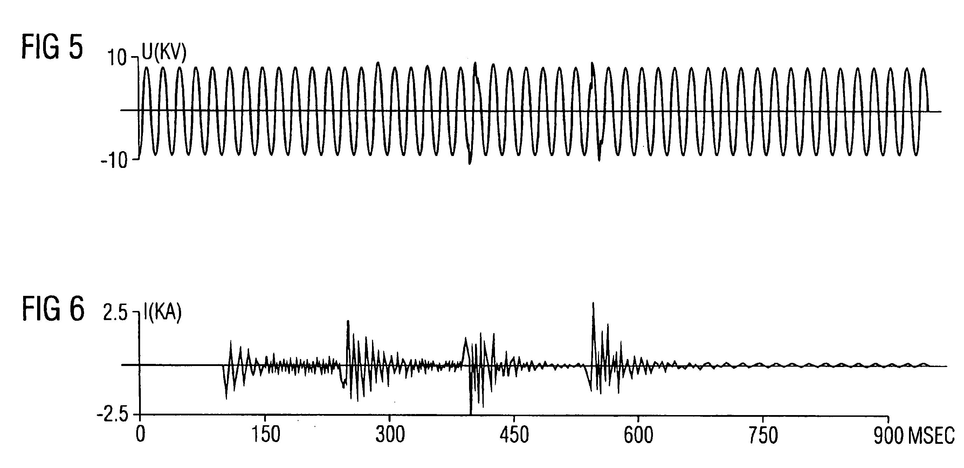

Mittels des erfindungsgemäßen Anschaltverfahrens sind erheblich geringere Netzrückwirkungen erreichbar als mit den üblichen Anschaltverfahren des Standes der Technik. Dies gilt, obwohl bei der erfindungsgemäßen Lösung alle Phasen von den Schaltern S1 bis S5 gleichzeitig geschaltet werden. Die Vorteile des erfindungsgemäßen Anschaltverfahrens gegenüber den üblichen Anschaltverfahren des Standes der Technik zeigen sich insbesondere bei einem Vergleich der FIG 3 mit FIG 5 und einem Vergleich der FIG 4 mit FIG 6. Denn die FIG 5 und 6 zeigen einen Spannungs- und einen Stromverlauf, die bei einem üblichen Anschaltverfahren des Standes der Technik auftreten. Ersichtlich treten beim üblichen Stand der Technik erheblich größere Netzrückwirkungen auf als bei dem erfindungsgemäßen Anschaltverfahren.

## Patentansprüche

1. Anschaltverfahren für einen Blindleistungskompensator mit mehreren parallel zueinander angeordneten Kompensationskomponenten (K1 - K3) an eine Betriebsspannung (U), wobei die Kompensationskomponenten (K1 - K3) von einer Steuereinheit (CU) zunächst nacheinander über einen Vorwiderstand (R) und sodann vorwiderstandsfrei an die Betriebsspannung (U) angeschaltet werden, **dadurch gekennzeichnet, dass** als zuerst über den Vorwiderstand (R) an die Betriebsspannung (U) angeschaltete Kompensationskomponente (K1) eine aktive Komponente (K1) mit mindestens einem steuerbaren Blindleistungselement, mit z. B. einem TCR, verwendet wird.

2. Anschaltverfahren nach Anspruch 1,
**dadurch gekennzeichnet,**
**dass** die Betriebsspannung (U) eine Wechselspannung mit einer Grundfrequenz (f) ist und dass die aktive Komponente (K1) von der Steuereinheit (CU) derart gesteuert wird, dass ein über den Vorwiderstand (R) fließender Strom (I) der Grundfrequenz (f) im Wesentlichen kompensiert wird.

3. Anschaltverfahren nach Anspruch 1 oder 2,
**dadurch gekennzeichnet,**
**dass** die nach der ersten Kompensationskomponente (K1) über den Vorwiderstand (R) an die Betriebsspannung (U) angeschalteten Kompensationskomponenten (K2, K3) Filterkreise (K2, K3) verwendet werden.

4. Anschaltverfahren nach einem der obigen Ansprüche,
**dadurch gekennzeichnet,**
**dass** der Vorwiderstand (R) von der Steuereinheit (CU) nach dem vorwiderstandsfreien Anschalten der Kompensationskomponenten (K1 - K3) an die Betriebsspannung (U) von der Betriebsspannung (U) getrennt wird.

5. Anschaltverfahren nach einem der obigen Ansprüche,
**dadurch gekennzeichnet,**
**dass** das vorwiderstandsfreie Anschalten der Kompensationskomponenten (K1 - K3) an die Betriebsspannung (U) für alle Kompensationskomponenten (K1 - K3) gleichzeitig erfolgt.

6. Anschaltverfahren nach einem der obigen Ansprüche,
**dadurch gekennzeichnet,**
**dass** ein zeitlicher Versatz (δt2) zwischen dem Anschalten von zwei unmittelbar nacheinander über den Vorwiderstand (R) an die Betriebsspannung (U) angeschalteten Kompensationskomponenten (K1 - K3) zwischen 50 und 300 ms liegt, insbesondere zwischen 80 und 200 ms, z. B. bei 100 bis 150 ms.

7. Anschaltverfahren nach einem der obigen Ansprüche,
**dadurch gekennzeichnet,**
**dass** zum Anschalten der Kompensationskomponenten (K1 - K3) an die Betriebsspannung (U) eine den Kompensationskomponenten (K1 - K3) vorgeordnete Verteilerschiene (DL) über den Vorwiderstand (R) an die Betriebsspannung (U) angeschaltet wird und die Kompensationskomponenten (K1 - K3) an die Verteilerschiene (DL) angeschaltet werden.

8. Anschaltverfahren nach Anspruch 7,
**dadurch gekennzeichnet,**
**dass** zum vorwiderstandsfreien Anschalten der Kompensationskomponenten (K1 - K3) an die Betriebsspannung (U) die Verteilerschiene (DL) vorwiderstandsfrei an die Betriebsspannung (U) angeschaltet wird.

9. Anschaltverfahren nach Anspruch 7 oder 8,
**dadurch gekennzeichnet,**
**dass** das Anschalten ersten Kompensationskomponente (K1) an die Verteilerschiene (DL) erst nach einem Zeitverzug (δt1) nach dem Anschalten der Verteilerschiene (DL) über den Vorwiderstand (R) an die Betriebsspannung (U) erfolgt.

10. Anschaltverfahren nach Anspruch 9,
**dadurch gekennzeichnet,**
**dass** der Zeitverzug (δt1) zwischen 50 und 300 ms liegt, insbesondere zwischen 80 und 200 ms, z. B. bei 100 bis 150 ms.

11. Anschaltverfahren nach Anspruch 6 und 9 oder 6 und 10,
**dadurch gekennzeichnet,**
**dass** der Zeitverzug (δt1) gleich dem zeitlichen Versatz (δt2) ist.

12. Anschaltverfahren nach einem der obigen Ansprüche,
**dadurch gekennzeichnet,**
**dass** die Betriebsspannung (U) eine Hochspannung, insbesondere eine Mittelspannung zwischen 6 und 36 kV, ist.

13. Anschaltverfahren nach einem der obigen Ansprüche,
**dadurch gekennzeichnet,**
**dass** eine Betriebsspannung (U) mit mehreren Phasen anliegt und **dass** die Phasen von der Steuereinheit (CU) gleichzeitig an die Kompensationskomponenten (K1 - K3) angeschaltet werden.

14. Auf einem Datenträger (DC) gespeichertes Steuerprogramm zur Durchführung eines Anschaltverfahrens nach einem der obigen Ansprüche.

15. Steuereinheit für einen Blindleistungskompensator, mit der ein Anschaltverfahren nach einem der Ansprüche 1 bis 13 ausführbar ist.

16. Blindleistungskompensator zur Durchführung eines Anschaltverfahrens nach einem der Ansprüche 1 bis 13.

## Claims

1. Method for connecting a static VAR compensator having a plurality of parallel compensation components (K1 - K3) to an operating voltage (U), in which the compensation components (K1 - K3) are first successively connected by a control unit (CU) to the operating voltage (U) via a series resistor (R) and are then connected to the operating voltage (U) without a series resistor, **characterized in that** an active component (K1) with at least one controllable wattless component element, e.g. with a TCR, is used as the compensation component (K1) which is first connected to the operating voltage (U) via the series resistor (R).

2. Connection method according to claim 1, **characterized in that** the operating voltage (U) is an AC voltage with a fundamental frequency (f), and **in that** the active component (K1) is controlled by the control unit (CU) in such a way that a current (I) having the fundamental frequency (f) which flows across the series resistor (R) is essentially compensated.

3. Connection method according to claim 1 or 2, **characterized in that** the compensation components (K2, K3) connected to the operating voltage (U) via the series resistor (R) after the first compensation component (K1) filter circuits (K2, K3) are used.

4. Connection method according to one of the above claims, **characterized in that**, following connection of the compensation components (K1 - K3) to the operating voltage (U) without a series resistor, the series resistor (R) is disconnected from the operating voltage (U) by the control unit (CU).

5. Connection method according to one of the above claims, **characterized in that** the connection of the compensation components (K1 - K3) to the operating voltage (U) without a series resistor is performed simultaneously for all compensation components (K1 - K3).

6. Connection method according to one of the above claims, **characterized in that** a time offset (δt2) between the connection of two compensation components (K1 - K3) connected to the operating voltage (U) immediately in succession via the series resistor (R) is between 50 and 300 ms, in particular between 80 and 200 ms, e.g. 100 to 150 ms.

7. Connection method according to one of the above claims, **characterized in that**, in order to connect the compensation components (K1 - K3) to the operating voltage (U), a distribution bus (DL) upstream of the compensation components (K1 - K3) is connected to the operating voltage (U) via the series resistor (R) and the compensation components (K1 - K3) are connected to the distribution bus (DL).

8. Connection method according to claim 7, **characterized in that** for the connection of the compensation components (K1 - K3) to the operating voltage (U) without a series resistor, the distribution bus (DL) is connected to the operating voltage (U) without a series resistor.

9. Connection method according to claim 7 or 8, **characterized in that** the first compensation component (K1) is connected to the distribution bus (DL) only after a time delay (δt1) following the connection of the distribution bus (DL) to the operating voltage (U) via the series resistor (R).

10. Connection method according to claim 9, **characterized in that** the time delay (δt1) is between 50 and 300 ms, in particular between 80 and 200 ms, e.g. 100 to 150 ms.

11. Connection method according to claim 6 and 9 or 6 and 10, **characterized in that** the time delay (δt1) is the same as the time offset (δt2).

12. Connection method according to one of the above claims, **characterized in that** the operating voltage (U) is a high voltage, in particular a medium voltage of between 6 and 36 kV.

13. Connection method according to one of the above claims, **characterized in that** an operating voltage (U) having a plurality of phases is applied and **in that** the phases are connected simultaneously to the compensation components (K1 - K3) by the control unit (CU).

14. Control program stored on a data carrier (DC) for implementing a connection method according to one of the above claims.

15. Control unit for a static VAR compensator with which a connection method according to one of claims 1 to 13 can be performed.

16. Static VAR compensator for implementing a connection method according to one of claims 1 to 13.

## Revendications

1. Procédé de connexion d'un compensateur de puissance réactive, comprenant plusieurs composants de compensation (K1 à K3) agencés en parallèle les uns avec les autres, à une tension de fonctionnement (U), les composants de compensation (K1 à K3) étant connectés à la tension de fonctionnement (U) par une unité de commande (CU) d'abord successivement par l'intermédiaire d'une résistance série (R) et ensuite sans résistance série, **caractérisé par le fait que** l'on utilise comme composant de compensation (K1) d'abord connecté par l'intermédiaire de la résistance série (R) à la tension de fonctionnement (U) un composant actif (K1) avec au moins un élément de puissance réactive commandable, par exemple un TCR.

2. Procédé de connexion selon la revendication 1,
**caractérisé par le fait que** la tension de fonctionnement (U) est une tension alternative avec une fréquence fondamentale (f) et que le composant actif (K1) est commandé de telle sorte par l'unité de commande (CU) qu'un courant (I) passant dans la résistance série (R) et ayant la fréquence fondamentale (f) est globalement compensé.

3. Procédé de connexion selon la revendication 1 ou 2,
**caractérisé par le fait que** l'on utilise des circuits de filtrage (K2, K3) comme composants de compensation (K2, K3) connectés après le premier composant de compensation (K1) par l'intermédiaire de la résistance série (R) à la tension de fonctionnement (U).

4. Procédé de connexion selon l'une des revendications précédentes,
**caractérisé par le fait que**, après la connexion sans résistance série des composants de compensation (K1 à K3) à la tension de fonctionnement (U), la résistance série (R) est coupée de la tension de fonctionnement (U) par l'unité de commande (CU).

5. Procédé de connexion selon l'une des revendications précédentes,
**caractérisé par le fait que** la connexion sans résistance série des composants de compensation (K1 à K3) à la tension de fonctionnement (U) s'effectue en même temps pour tous les composants de compensation (K1 à K3).

6. Procédé de connexion selon l'une des revendications précédentes,
**caractérisé par le fait qu'**un décalage temporel (δt2) entre la connexion de deux composants de compensation (K1 à K3) connectés directement l'un après l'autre par l'intermédiaire de la résistance série (R) à la tension de fonctionnement (U) est compris entre 50 et 300 ms, notamment entre 80 et 200 ms, par exemple entre 100 et 150 ms.

7. Procédé de connexion selon l'une des revendications précédentes,
**caractérisé par le fait que**, pour la connexion des composants de compensation (K1 à K3) à la tension de fonctionnement (U), une barre de distribution (DL) placée du côté amont des composants de compensation (K1 à K3) est connectée par l'intermédiaire de la résistance série (R) à la tension de fonctionnement (U) et les composants de compensation (K1 à K3) sont connectés à la barre de distribution (DL).

8. Procédé de connexion selon la revendication 7,
**caractérisé par le fait que**, pour la connexion sans résistance série des composants de compensation (K1 à K3) à la tension de fonctionnement (U), la barre de distribution (DL) est connectée sans résistance série à la tension de fonctionnement (U).

9. Procédé de connexion selon la revendication 7 ou 8,
**caractérisé par le fait que** la connexion du premier composant de compensation (K1) à la barre de distribution (DL) s'effectue seulement après un certain délai (δt1) après la connexion de la barre de distribution (DL) par l'intermédiaire de la résistance série (R) à la tension de fonctionnement (U).

10. Procédé de connexion selon la revendication 9,
**caractérisé par le fait que** le délai (δt1) est compris entre 50 et 300 ms, notamment entre 80 et 200 ms, par exemple entre 100 et 150 ms.

11. Procédé de connexion selon les revendications 6 et 9 ou 6 et 10,
**caractérisé par le fait que** le délai (δt1) est égal au décalage temporel (δt2).

12. Procédé de connexion selon l'une des revendications précédentes,
**caractérisé par le fait que** la tension de fonctionnement (U) est une haute tension, notamment une tension moyenne comprise entre 6 et 36 kV.

13. Procédé de connexion selon l'une des revendications précédentes,
**caractérisé par le fait qu'**il y a une tension de fonctionnement (U) avec plusieurs phases et que les phases sont connectées simultanément par l'unité de commande (CU) aux composants de compensation (K1 à K3).

14. Programme de commande mémorisé sur un support de données (DC) pour la mise en oeuvre d'un procédé de connexion selon l'une des revendications précédentes.

15. Unité de commande pour un compensateur de puissance réactive, avec laquelle un procédé de connexion selon l'une des revendications 1 à 13 est exécutable.

16. Compensateur de puissance réactive pour la mise en oeuvre d'un procédé de connexion selon l'une des revendications 1 à 13.
